# EUROPEAN PATENT APPLICATION

(11) **EP 1 757 425 A1**
(43) Date of publication of application: **28.02.2007**
(21) Application number: 06291347.0
(22) Date of filing: 23.08.2006
(51) Int. Cl.: B29C 43/00, F16D 69/00

(54) **Manufacturing method for friction linings**

(30) Priority: 23.08.2005 JP 2005241675
(71) Applicant: Nisshinbo Industries, Inc., Chuo-ku, Tokyo 103-8650 (JP)
(72) Inventor: Chiba, Masanori, c/o Nisshinbo Industries, Inc., Oura-machi Oura-gun Gunma-ken (JP); Ishii, Yasuji, c/o Nisshinbo Industries, Inc., Oura-machi Oura-gun Gunma-ken (JP)
(74) Representative: Bentz, Jean-Paul

(57) **Abstract**

It is an object to provide the manufacturing method for the friction material which maintains the quality of the friction material and reduces the cost of the facilities and the maintenance cost. The manufacturing method for a friction material comprising a molding step of the friction material as pressurizing and heating a molding material made of a raw friction material within a molding die with an upper die (1), a middle die (2), and a lower die (3), wherein a temperature of the upper die and the lower die in said molding step is 190°C - 230°C and a pressure thereof is 0.05MP - 10MP.

## Description

### BACKGROUND OF THE INVENTION

### Field of the Invention

This invention relates to friction material products preferably used for such as a disc pad and a brake lining for such as an automobile, a heavy duty truck, a rail train, and a various industrial machineries.

### Description of the Related Arts

Among various friction material products, there are products such as a disc pad comprised of the friction material fixed on a back plate and a brake lining which is the friction material as itself.

Generally, the friction material products are produced through a "mixing step" where the raw friction material made of such as a fiber base material, filler, and binder are evenly mixed with a mixer such as Redige mixer and Eirich mixer, a "preliminarily forming step" where a preliminarily formed product is formed as filling the respective mixed materials of fixed quantity in a metal die and is pressurized by a pressing device, a "molding step" where the preliminarily formed product is pressurized and heated by another pressing device, a "heat treatment step" where a reaction of the thermosetting resin of the entire friction material is completed to secure stability and mechanical strength of the friction resin, a "painting step", a "grinding step" where a surface of the friction material is ground, slit, and chamfer are formed, a "heat shearing step" where braking effect of a new friction material is secured as lightly burning the surface of the friction material, and an "inspection step". Furthermore, for the disc pad, a punching step exists prior to the above-described molding steps, and the friction material is fixed on the back plate which goes through such as a degreasing process, a blasting process, and a chemical conversion process, and a primer forming process.

The conventional friction materials products, in the above-described molding steps, as disclosed in the Japanese Provisional Patent Publication No. 2003-268352, is pressurized under 35MPa and heated with the die temperature of 180°C for 5 - 10 minutes; however, generally, the friction material is pressurized under 30 - 50MPa and heated with the die temperature of 130°C - 180°C for 5 - 15 minutes.

Additionally, as disclosed in the Japanese Provisional Patent Publication No. 2003-145565, the raw friction material contains the thermosetting resin as the binding material so as to depressurizing, i.e., outgassing, numerous times during the pressurizing and heating step. Although these conditions are dispensable to maintain the quality of the friction material products, because high pressure is necessary (especially for using a molding die having plural cavities), the facility becomes larger, and if simply increasing the die temperature to shorten the molding time, outgassing efficiency is jeopardized, which causes problem, for example, blistering and crack, so far as the quality of the friction material products are concerned, and raises an issue of how the "molding step" can be improved in consideration of further reducing the cost of manufacturing the friction material products.

### SUMMARY OF THE INVENTION

This invention is to provide the manufacturing method for the friction material products which maintains the quality of the friction material products and reduces the cost of the facilities and the maintenance cost in consideration of the above-specified matters.

To resolve the above-raised problems, this invention is characterized in that the temperature of the upper die and the lower die in the molding step is 190°C - 230°C and a pressure thereof is 0.05MP - 10MP in the manufacturing method for the friction material products which comprises the molding step of the friction material as pressurizing and heating the molding material made of the raw friction material within the molding die with the upper die, the middle die, and the lower die.

This invention is preferably designed such that the die temperature of the middle die becomes the melting point of the resin contained in the molding material or higher but lower than the curing temperature because of the heat conduction of the die temperature of the upper die and the lower die. Furthermore, this invention can be structured such that the middle die may be made of the porous material and may include the heat conductivity controlling filler or include the material with magnetic properties. In addition, this invention may be designed such that the die temperature of the middle die is 190°C - 230°C because of high-frequency heating in the molding step.

Also, in the above-structure, it is preferable that this invention uses molding material made of the granulated substance, and moreover the molding material is preferably pre-heated. Furthermore, this pre-heating is preferably by dielectric heating due to high frequency or microwave.

### [Advantages of the Invention]

This invention enables to manufacture the friction material products as pressurizing and heat-molding the same in a short period of time by applying a higher temperature than the conventional technology and press/heat-molding while applying smaller pressure than the conventional technology or by regulating the die temperature of the middle die in consideration of the curing temperature of the resin in the molding material, and therefore conventional large facility, for example, use of large hydraulic heat pressing device, is not necessary, and the molding die made of a rather soft material, which may be broken if the die goes through the conventional device, may be utilized, thereby giving significant advantages by allowing to manufacture the friction material products with lower cost without the risk of blistering and crack.

Also, when comparing the significant advantages of this invention to the conventional technology, the conventional technology gives a problem of generating a crack because of rapidly increased large amount of gas as the curing reaction of the raw friction material suddenly progresses when the molding temperature is too high and a problem of inefficient compressing time because it takes too much time in compressing the raw friction material, and therefore the conventional technology required to form the friction material by the heating/pressurizing at the molding temperature of 180°C or lower and high molding pressure of 30 - 50MPa. However, it was found that even if the molding temperature is over 180°C, the crack does not occur if the molding pressure is low, and even if the molding pressure is low, the raw friction material can be compressed in a short period of time if heated by the molding temperature over 180°C. It was believed that the crack occurs due to the high molding temperature and the large amount of rapidly generated gas; however, it is considered that the crack also deeply relates to the molding pressure, and the molding temperature deeply relates to the longer time necessary when the molding pressure is low. A raw friction material mixture causes compression strain as being compressed. When decompressed in the process of outgassing, the compression strain is released in a direction of thickness, which causes a spring back. As the pressure become higher, the compression strain and the spring back amount become larger. That is, when the molding pressure is high, the friction material is compressed up to approximately the same level as the product by the first pressure. Because the molding temperature is so high that the large amount of reaction gas is rapidly generated within the friction material, which increases the internal pressure of the friction material. Outgassing under this condition causes spring back on the friction material, whereby blowing the large amount of gas off from the side surface of the friction material. As a result, the crack occurs. Furthermore, the raw friction material, the resin thereof is dissolved as being heated and becomes an easily fluidizable, thereby enabling to compress even with the low pressure. However, if the molding temperature is low, it takes time to attain the easily fluidizable condition after dissolved resin, which also requires more time with the low pressure. On the contrary, this invention uses the lower pressure to gradually pressurize, the amount of spring back becomes smaller, which makes it difficult for the crack to occur even if the large amount of gas blowout. Also, this invention utilizes the higher temperature, and the resin can quickly be dissolved, which allows the raw friction material to become easily fluidizable, and therefore the raw friction material can be compressed with low pressure in a short period of time. In addition, this invention heats the die temperature of the middle die for example with a softening temperature of the resin or more but with the curing temperature or lower at the molding step. The resin at the side surface of the friction material contacting the middle die does not cure, and therefore the gas can easily come out of the side surface. The gas can easily travel out, thereby molding with the short period of time and obtaining the friction material products with excellent appearance. Furthermore, at the certain degree of outgassing state, the friction material is heated with the high temperature of 190°C - 230°C from that state, which gives the advantage that curing of the resin around the side surface of the friction material can quickly be completed.

### BRIEF EXPLANATION OF THE DRAWINGS

The above and other objects of the present invention will become readily apparent by reference to the following detailed description when considered in conjunction with the accompanying drawings wherein:

FIG. 1 is a block diagram of one example of the manufacturing process for general friction material;

FIG. 2 is an enlarged cross-section view of the characterizing portion of one example of the manufacturing apparatus for this embodiment;

FIG. 3 is a chart showing the composition of the raw friction material;

FIG. 4 is a chart showing the formation condition to manufacture the friction material in the embodiments 1 - 17; and

FIG. 5 is a chart showing the formation condition to manufacture the friction material in the comparative examples 1 - 8.

### EMBODIMENTS OF THE INVENTION

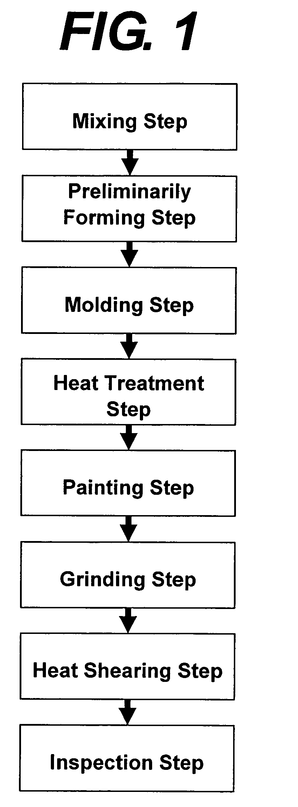

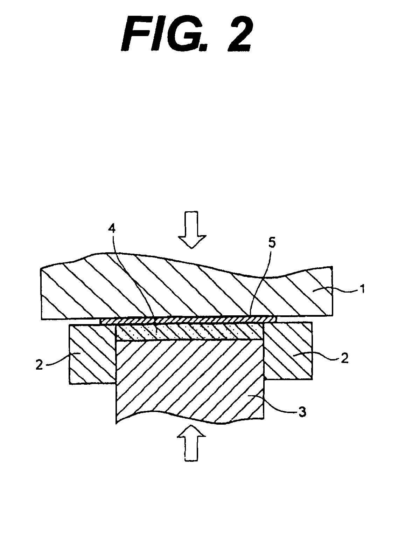

Embodiments of this invention will be explained with reference to the accompanied drawings. FIG. 1 is a block diagram of one example of a general manufacturing process of the friction material products, and FIG. 2 is an enlarged cross-section view of the characterizing portion of one example of the manufacturing apparatus for this invention.

FIG. 1 illustrates a flow of the manufacturing process of the above-described general friction material products. FIG. 2 is an example of the apparatus used for the molding step in FIG. 1, which is one example of the apparatus for implementing this invention.

In FIG. 2, there are an upper die 1, a middle die 2 with a vertical penetrating hole, and a lower die 3 inserted in the penetrating hole of the middle die 2, and the upper die 1, the middle die 2, and the lower die 3 constitute the embodiment of the heat pressing device in this invention. The friction material products 4 is molded by the heat pressing device, and the friction material 4 is fixed on a back plate 5. FIG. 2 illustrates an example of manufacturing a disc pad in which the friction material 4 is fixed on the back plate 5; however, this invention is applicable to a case when the friction material product 4 itself is a product without being fixed on the back plate such as a brake lining.

The above-described upper die 1 and lower die 3 are made of metal in this embodiment. Also, metal such as alloy tool steel SKD11 (Japanese Industrial Standards G4404.2006) may be used for the middle die 2, but the porous material is preferable for forming the middle die 2. The porous material lowers the heat conductivity of the middle die, thereby enabling to maintain the middle die temperature and stability of the product quality. For the porous material, porous ceramics may be utilized, but forming the middle die made of ceramic increases the cost of manufacturing, which automatically results in too much increase in the implementation cost. In consideration of the implementation cost, it is preferable that wood, plywood, particle board made of bound, milled wood, MDF (Medium Density Fiberboard), HDF (High Density Fiberboard), a material made by binding such as paper, rice bran, and bean curd refuse, cement, concrete, mortar, or a material made by binding powder which ground friction materials with resin can be utilized as the porous material.

In addition, the middle die 2 can be structured to include heat conductivity controlling filler for such as metal powder, structured to include a material having magnetic properties such as black iron oxide (magnetite), iron powder, and stainless powder, or further structured to include the heat conductivity controlling filler together with the material having magnetic properties. Here, by including the heat conductivity controlling filler, the temperature of the middle die 2 can be rapidly increased, thereby quickly curing the side surface of the friction material 4. Also, by including the material having the magnetic properties, the temperature of the middle die 2 can be increased in the short period of time.

This invention is mainly characterized in that the temperature of the upper die 1 and the lower die 3 of in the molding step is 190°C - 230°C and a pressure thereof is 0.05MP - 10MP when the friction material is molded through the molding step of press-heating after placing the molding material made of the later described raw friction material in the molding die of the above-described heat pressing device, which is comprised of the upper die 1, middle die 2, and lower die 3. At that time, it is preferable that the die temperature of the middle die 2 becomes the melting point of the resin contained in the molding material or higher but lower than the curing temperature because of the heat conduction of the die temperature of the upper die 1 and the lower die 3. The temperature varies depending upon the resin in the molding material, but for example in using the phenol resin it is preferable to maintain approximately 80°C - 130°C.

It is believed that the above-described temperature can be maintained because for the middle die 2 formed by the porous material, the heat conductivity is low and the temperature cannot easily increase even if press-heat molding is repeated. The temperature of the middle die 2 is set to be lower than that of the upper die 1 and the lower die 3 and the melting point of the resin contained in the molding material or higher as above but lower than the curing temperature (for example approximately 80°C - 130°C), thereby delaying the curing reaction of the side surface of the friction material 4 contacting the middle die 2 and making it easy to outgas from the side surface.

In this invention, the die temperature of this middle die 2 in the molding step, for example, can be regulated to 190°C - 230 °C by high-frequency heating the at the later point in the molding step or prior to the ending of the molding step. The die temperature of the middle die 2 at the beginning stage of the molding step is maintained by the die temperature of the upper die 1 and the lower die 3 as described above; however, when the entire friction material 4 is completely cured at the ending point in the molding step, the curing temperature needs to be increased at once. As to the high-frequency heating, for example a high-frequency induction heating coil may be utilized to regulate the die temperature of the middle die 2.

Next, the molding material made of the raw friction material utilized in this invention may be powder material but preferably granulated substance. When using the granulated substance with large particles, pressure transmission loss due to the friction among particles becomes smaller, thereby allowing the formation based on the lower pressure force than when using the power material and the press-heat formation in the short period of time.

The molding material does not need to be pre-heated but generally pre-heated molding material is used. In this invention, pre-heating of the molding material can be done by the high-frequency heating which allows the internal heating or dielectric heating due to the microwave.

After performing the above-described molding step, the friction material 4 and the back plate 5 move to the heat treatment step, where the heat treatment can be done in the high temperature atmosphere by a heat treat furnace or placing them between high temperature heat plates. The heat treatment of placing the object between the heat plates is preferably used for the reduction of treatment time.

The example of this invention is as stated above, and the embodiment of this invention will be explained with the comparative example.

### Embodiments 1-17

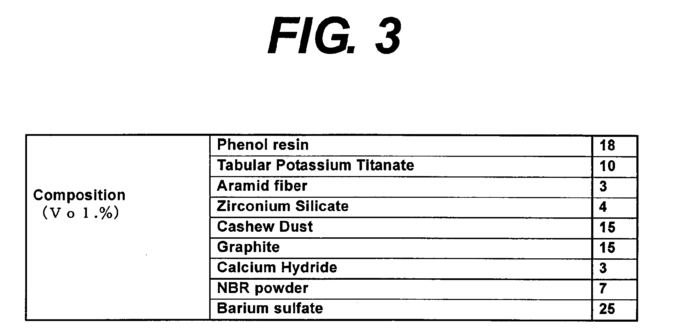

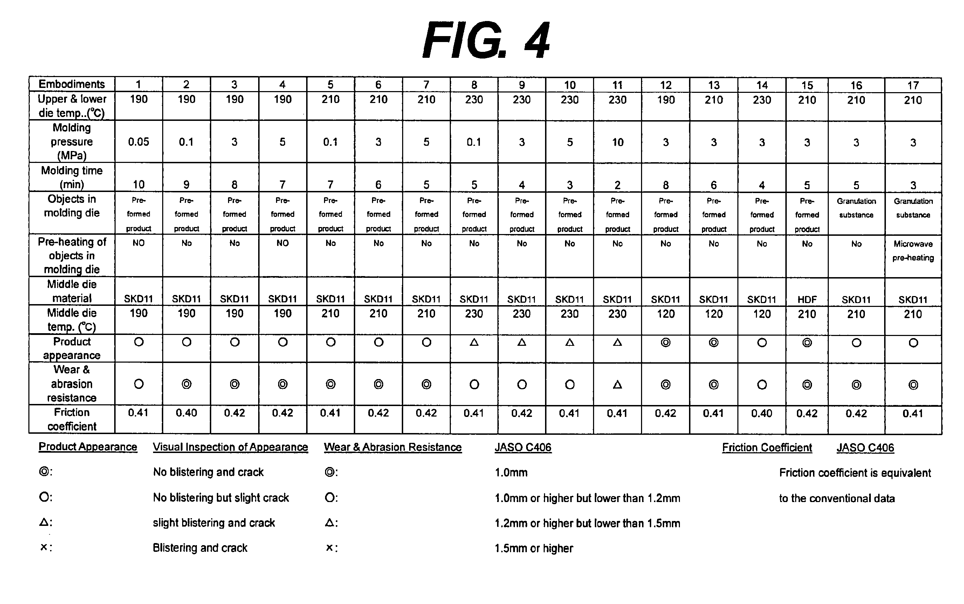

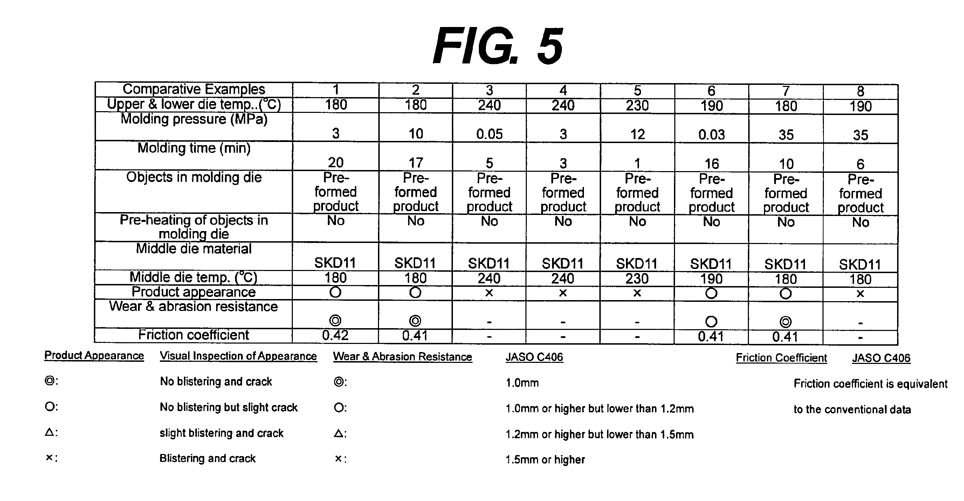

The raw friction material with the composition as shown in the FIG. 3 is used under the formation condition shown in FIG. 4 to manufacture the friction material in the embodiments 1 - 17 respectively and under the formation condition shown in FIG. 5 to manufacture the friction material in the comparative examples 1-8. In FIGS. 4 and 5, the product appearance, wear and abrasion resistance, and friction coefficient of the respective manufactured friction material.

### Evaluation

Evaluation as to the friction material in the above-described embodiments 1 - 17 and the friction material of the comparative examples 1 - 8 is also shown in FIG. 4 and 5.

### Industrial Applicability

Unlike the conventional manufacturing method of the friction material which is pressurized with high pressure and heated at 180°C or lower, by applying lower pressure and higher temperature to perform press-heat molding, the friction material of this invention can offer the same or better appearance in the short period of time, which results to the low cost manufacturing.

It is readily apparent that the above-described embodiments have the advantage of wide commercial utility. It should be understood that the specific form of the invention hereinabove described is intended to be representative only, as certain modifications within the scope of these teachings will be apparent to those skilled in the art. Here, there may be obvious modifications to the embodiment described above. Accordingly, reference should be made to the following claims in determining the full scope of the invention.

## Claims

1. A manufacturing method for a friction material product comprising a molding step of the friction material (4) as pressurizing and heating a molding material made of a raw friction material within a molding die with an upper die (1), a middle die (2), and a lower die (3), wherein a temperature of the upper die and the lower die in said molding step is 190°C - 230°C and a pressure thereof is 0.05MP - 10MP.

2. The manufacturing method for the friction material product according to claim 1, **characterized in that** because of a heat conduction of the die temperature of the upper die and the lower die, a die temperature of the middle die becomes a melting point or higher of a resin contained in the molding material but lower than a curing temperature.

3. The manufacturing method for the friction material product according to claim 1 or claim 2, **characterized in that** the middle die is made of a porous material.

4. The manufacturing method for the friction material product according to any one of claims 1 - 3, **characterized in that** the middle die includes a heat conductivity controlling filler.

5. The manufacturing method for the friction material product according to any one of claims 1 - 4, **characterized in that** the middle die includes a material with magnetic properties.

6. The manufacturing method for the friction material product according to any one of claims 1 - 5, **characterized in that** because of high-frequency heating in the molding step, the die temperature of the middle die is 190°C - 230°C.

7. The manufacturing method for the friction material product according to any one of claims 1-6, **characterized in that** the molding material is a granulated substance

8. The manufacturing method for the friction material product according to any one of claims 1 - 7, **characterized in that** the molding material is pre-heated.

9. The manufacturing method for the friction material product according to claim 8, **characterized in that** the preheating is dielectric heating due to high frequency or microwave.
